# EUROPÄISCHE PATENTSCHRIFT

(11) **EP 2 372 203 B1**
(45) Veröffentlichungstag und Bekanntmachung des Hinweises auf die Patenterteilung: **10.10.2012**
(21) Anmeldenummer: 10158266.6
(22) Anmeldetag: 29.03.2010
(51) Int. Cl.: F16K 31/05

(54) **Kopplung eines Stellantriebs mit einem Ventil unter Verwendung eines in eine Ausnehmung eingreifenden Halteelements**
Coupling of an actuating drive with a valve using a holding element protruding into a recess
Couplage d'un mécanisme de commande doté d'une soupape en utilisant un élément de retenue s'intégrant dans un creux

(43) Veröffentlichungstag der Anmeldung: 05.10.2011
(73) Patentinhaber: SIEMENS AKTIENGESELLSCHAFT, 80333 München (DE)
(72) Erfinder: Evertz, Jörg, 8903, Birmensdorf (CH); Sprecher, Martin, 6330, Cham (CH)

(56) Entgegenhaltungen:
- US-A1- 2002 119 003
- US-B1- 6 361 019
- Anonymous: "Die richtige Wahl für die Um- und Nachrüstung von HLK-Regelventilen" Belimo Website 7. April 2004 (2004-04-07), XP002599300 Gefunden im Internet: URL:http://www.belimo.ch/pdf/d/NEWS_VA1_d. pdf [gefunden am 2010-09-03]

## Beschreibung

Die vorliegende Erfindung betrifft das technische Gebiet der Heizungs- Lüftungs- und Klimatechnik. Die vorliegende Erfindung betrifft insbesondere eine Vorrichtung zum Koppeln eines Stellantriebs mit einem Ventil, welches durch einen entlang einer z-Achse verschiebbaren Stößel verstellbar ist. Die vorliegende Erfindung betrifft ferner einen Stellantrieb mit einer derartigen Koppelvorrichtung sowie ein Verfahren zum mechanischen Koppeln eines Stellantriebs mit einem Ventil, welches durch einen entlang einer z-Achse verschiebbaren Stößel verstellbar ist.

HLK-Ventile werden typischerweise mit einem elektromotorischen Stellantrieb betätigt. Um dabei einer bestimmte Position des Stellantriebs eine genau definierte Stellung des Ventils zuordnen zu können, was eine unabdingbare Voraussetzung für eine präzise Ansteuerung oder Regelung des Ventils ist, muss die relative Lage zwischen Stellantrieb und Ventil genau definiert sein. Dabei ist zu bedenken, dass eine typische HLK-Anlage eine Vielzahl von steuerbaren Ventilen aufweist und dass bei der Montage oder der Wartung einer HLK-Anlage der zuständige Monteur häufig nicht immer mit maximaler Sorgfalt arbeitet.

Die Broschüre "Die richtige Wahl für die Um- und Nachrüstung von HLK-Regelventilen" aus der Belimo Website "http://www.belimo.ch/pdf/d/NEWS_VA1_d.pdf" offenbart eine Vorrichtung gemäß dem Oberbegriff des Anspruchs 1.

Der Erfindung liegt die Aufgabe zugrunde, eine auf einfache Weise fehlerfrei zu realisierende und zugleich zuverlässige mechanische Kopplung zwischen einem Ventil-Stellantrieb und einem Ventil zu ermöglichen.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird eine Vorrichtung zum mechanischen Koppeln eines Stellantriebs mit einem Ventil beschrieben, welches durch einen entlang einer z-Achse verschiebbaren Stößel verstellbar ist. Die beschriebene Vorrichtung weist auf (a) ein Halteelement, welches an einem Verbindungschassis des Stellantriebs anbringbar ist und welches ausgebildet ist, an zwei einander gegenüberliegenden Seiten eines Anschlussstutzens eines Ventilkörpers in eine an dem Anschlussstutzen angebrachten Ausnehmung einzugreifen, und (b) eine Klemmeinrichtung, welche an einem Abschnitt des Halteelements angeordnet ist und welche derart ausgebildet ist, dass bei einer Betätigung der Klemmeinrichtung der Abschnitt des Halteelements parallel zu der z-Achse relativ zu dem Verbindungschassis verschoben wird, so dass das Verbindungschassis an dem Anschlussstutzen anliegt.

Der beschriebenen Kopplungsvorrichtung liegt die Erkenntnis zugrunde, dass das Halteelement einfach durch eine in Bezug zu der axialen Richtung des Ventilstößels radiale Bewegung an der Ausnehmung angebracht werden kann. Dabei kann das Halteelement in die Ausnehmung eingeschoben werden. Ferner wird die relative axiale Lage (in Bezug zur z-Achse) zwischen dem Verbindungschassis des Stellantriebs und dem Anschlussstutzen dadurch festgelegt, dass nach einem Betätigen der Klemmeinrichtung das Verbindungschassis beispielsweise an einem Vorsprung des Anschlussstutzens anliegt.

Vor dem Betätigen der Klemmeinrichtung kann das Anbringen des Halteelements an dem Anschlussstutzen des Ventilkörpers mit einem gewissen Spiel erfolgen, so dass dies ohne ein Werkzeug einfach von einer beliebigen Bedienperson durchgeführt werden kann. Nach dem Anbringen des Halteelements an dem Anschlussstutzen kann dann die Klemmeinrichtung betätigt werden. Dabei wird der erwähnte Abschnitt des Halteelements in Richtung des Verbindungschassis verschoben. Zumindest ein anderer Abschnitt des Halteelements kann sich dabei an einem Auflagepunkt des Verbindungschassis abstützen. Damit bewegt sich jedoch auch derjenige Teil des Halteelements, welcher in die an dem Anschlussstutzen angebrachte Ausnehmung eingreift, in Richtung zu dem Verbindungschassis. Auf diese Weise wird das Verbindungschassis gegen das Anschlusselement gedrückt und so die relative räumliche Lage zwischen Anschlussstutzen und Verbindungschassis spielfrei festgelegt. Dies gilt insbesondere für die nunmehr eindeutig definierte relative axiale Lage zwischen Stellantrieb und Ventil. Die auf diese Weise spielfrei definierte relative axiale Lage zwischen Stellantrieb und Ventil gewährleistet nämlich, dass einer bestimmten Stellung des Stellantriebs eindeutig eine genau definierte Stellung des Ventils zugeordnet werden kann. Dadurch kann der Stellantrieb das Ventil besonders genau steuern.

Es wird darauf hingewiesen, dass sich bei einer Betätigung der Klemmeinrichtung das Halteelement um den Auflagepunkt bzw. um die Auflagepunkte des o.g. anderen Abschnitts des Halteelements dreht. Dabei kann die Klemmeinrichtung derart dimensioniert sein, dass das Halteelement auch dann nicht ihre Funktionalität verliert, wenn die Klemmeinrichtung trotz eines bereits vorhandenen Anliegens des Verbindungschassis an dem Anschlussstutzen weiter betätigt wird. So kann beispielsweise die Klemmeinrichtung einen Anschlagmechanismus aufweisen, welcher sicherstellt, dass das Halteelement elastisch und nur im zulässigen Maß plastisch verformt wird. Auf diese Weise kann bei einem zu kraftvollen Betätigen der Klemmeinrichtung eine Beschädigung des Halteelements und damit der ganzen Koppelvorrichtung ausgeschlossen werden.

Das Verbindungschassis des Stellantriebs, an welchem das Halteelement anbringbar ist, kann jede beliebige Rahmenstruktur oder Konsole sein. Diese Rahmenstruktur kann ein Teil eines Gehäuses des Stellantriebs oder ein separates Gehäuse des Stellantriebs sein. Da sich dieser Gehäuseteil oder dieses separate Gehäuse in vielen Einbausituationen unterhalb des Stellantriebs befinden, kann das Verbindungsgehäuse auch als unteres Gehäuse(teil) bezeichnet werden.

Der Anschlussstutzen kann jede beliebige Geometrie aufweisen, welche ein Anbringen der Verbindungsvorrichtung mithilfe der beschriebenen Koppelvorrichtung erlaubt. Der Anschlussstutzen kann insbesondere ein Flansch sein, der sich von einer Oberfläche des Ventilkörpers oder von einem Gehäuse des Ventils erhebt.

Gemäß einem weiteren Ausführungsbeispiel der Erfindung weist die Klemmeinrichtung eine Schraube und eine mit der Schraube über ein Gewinde der Schraube gekoppeltes Klemmelement auf.

Die Schraube kann eine handelsübliche Schraube mit einem beliebigen Kopf und einem Außengewinde sein. Das Klemmelement kann eine Mutter oder eine Platte mit einem zu dem Außengewinde komplementären Innengewinde sein.

Von den beiden Komponenten Schraubenkopf und Klemmelement liegt im zusammengebauten Zustand (Stellantrieb ist über das Verbindungschassis mit dem Anschlussstutzen des Ventils verbunden) eine Komponente an einem Vorsprung oder einer Kante des Verbindungschassis an und die andere Komponente liegt an dem Halteelement an. Auf diese Weise kann derjenige Teil des Halteelements, welcher an der Klemmeinrichtung anliegt, relativ zu dem Verbindungschassis verschoben werden und damit, wie oben erläutert, das Verbindungschassis an dem Anschlussstutzen fixiert werden.

Gemäß einem weiteren Ausführungsbeispiel der Erfindung ist die Ausnehmung eine Nut. Dies hat den Vorteil, dass das Halteelement in eine besonders einfach geformte und bei vielen bekannten Ventilen bzw. Ventil-Anschlussstutzen bereits ausgebildete Ausnehmung eingreifen kann. Die beschriebene Kopplungsvorrichtung kann damit zur Ankopplung von Stellantrieben an eine Vielzahl von bereits bekannten und gängigen Ventilen bzw. Ventil-Anschlussstutzen verwendet werden. Eine Anpassung von bereits etablierten und üblichen Geometrieen von Ventil-Anschlussstutzen an die beschriebene Koppelvorrichtung ist somit auf vorteilhafte Weise nicht erforderlich.

Gemäß einem weiteren Ausführungsbeispiel der Erfindung ist die Nut eine zumindest teilweise um den Anschlussstutzen umlaufende Ringnut. Der Anschlussstutzen ist dabei bevorzugt entlang der z-Achse (Verschieberichtung des Ventilstößels) ausgerichtet, so dass die Ringnut auch um die z-Achse bzw. die Verschiebeachse des Ventilstößels umläuft.

Eine vollständig entlang des Umfangs des Anschlussstutzens umlaufende Ringnut hat den Vorteil, dass bei einer einfachen Geometrie der oben beschriebenen Ausnehmung die Kopplungsvorrichtung von verschiedenen Seiten an das Ventil bzw. den Ventilstutzen herangeführt werden kann. Somit kann das Halteelement von allen möglichen Seiten radial an der Ausnehmung eingreifen. Der Stellantrieb kann somit in verschiedenen Winkellagen an dem Ventilstutzen angebracht werden. Dies ist in der Praxis insbesondere dann von großem Vorteil, wenn der Raum, der für den Stellantrieb zur Verfügung steht, beispielsweise durch Rohrleitungen, Isolierungen und/oder anderen Stellantrieben begrenzt ist.

Gemäß einem weiteren Ausführungsbeispiel der Erfindung weist das Halteelement einen ersten Schenkel und einen zweiten Schenkel auf. Dabei ist der erste Schenkel ausgebildet um in einen ersten Bereich der Ausnehmung einzugreifen. Entsprechend ist der zweite Schenkel ausgebildet um in einen zweiten Bereich der Ausnehmung einzugreifen. Der erste Bereich und der zweite Bereich sind in Bezug zu der z-Achse an einander gegenüberliegenden Seiten des Anschlussstutzens ausgebildet. Das Halteelement mit den beiden Schenkeln kann eine Gabelform aufweisen. Dabei entsprechen die beiden Schenkel jeweils einem Zinken einer Gabel. Das Halteelement kann ebenso als U-förmig bezeichnet werden, wobei die beiden Schenkel jeweils einem U-Schenkel entsprechen.

Die gabel- oder U-förmige Ausgestaltung des Halteelements hat den Vorteil, dass die Vorrichtung auf einfache Weise an den Anschlussstutzen herangeführt werden kann. Der Stellantrieb kann somit auf besonders einfache Weise an dem Anschlussstutzen bzw. an dem Ventilstutzen angebracht werden.

Gemäß einem weiteren Ausführungsbeispiel der Erfindung ist der Abschnitt des Halteelements ein Verbindungsabschnitt, an welchem der erste Schenkel und der zweite Schenkel angebracht sind. Dies hat den Vorteil, dass bei einer Betätigung der Klemmeinrichtung automatisch Teilbereiche von beiden Schenkeln parallel zu der z-Achse relativ zu dem Verbindungschassis verschoben werden. Damit können durch die Betätigung einer einzigen Klemmeinrichtung, welche wie oben beschrieben beispielsweise eine einzige Schraube umfassen kann, beide Schenkel gleichzeitig bewegt und den Anschlussstutzen, in dessen Ausnehmung die beiden Schenkel eingreifen, auf einfache und effiziente Weise an das Verbindungschassis herangeführt werden.

Es wird darauf hingewiesen, dass in der Regel der Ventilkörper in einem Rohrsystem und damit auch der Anschlussstutzens des Ventilkörpers räumlich fixiert sind. Dies bedeutet, dass dann das Verbindungschassis an den Anschlussstutzen herangeführt wird.

Der Verbindungsabschnitt kann ein zentraler Bereich der Haltevorrichtung sein, von welchem sich die beiden Schenkel entlang ihrer Längsrichtung erstrecken. Dies bedeutet, dass die beiden Schenkel in dem Verbindungsabschnitt des Halteelements zusammenlaufen.

Das Halteelement kann einstückig beispielsweise aus Metall ausgebildet sein. Der Verbindungsabschnitt und die beiden Schenkel können jedoch auch mehrere ursprünglich separate Komponenten sein, die in geeigneter Weise zusammengefügt wurden.

Gemäß einem weiteren Ausführungsbeispiel der Erfindung weist die Koppelvorrichtung ferner eine Montagehilfseinrichtung auf, welche im Bereich des Endes von zumindest einem der beiden Schenkel ein Einschnappelement aufweist, welches derart eingerichtet ist, dass das Halteelement, wenn es in Bezug zu der z-Achse in radialer Richtung zu dem Anschlussstutzen bewegt wird, an einer vorbestimmten Radialposition einrastet. Die beschriebene Montagehilfseinrichtung kann beispielsweise dadurch realisiert werden, dass an zumindest einem der beiden Schenkel des Halteelements ein Schnappmechanismus ausgebildet oder angebracht ist. Das Einschnappelement kann jedoch auch eine separate Komponente sein, die an dem Ende des jeweiligen Schenkels in geeigneter Weise angebracht ist und oder die das Halteelement an der Außenseite umgibt.

Die beschriebene Radialposition kann insbesondere die endgültige radiale Endposition der Haltevorrichtung relativ zu dem Anschlussstutzen sein. Dadurch kann ein Monteur den Stellantrieb auf besonders einfache Weise an dem Ventil bzw. an dem Ventilkörper befestigen. Der Monteur kann sich nach einem Einschnappen des Halteelementes nämlich ausschließlich um eine Verbindung zwischen einem verschiebbaren Koppelelement des Stellantriebs mit dem Stößel des Ventils kümmern.

Gemäß einem weiteren Ausführungsbeispiel der Erfindung ist das zumindest eine Halteelement derart ausgeformt, dass das Halteelement, wenn es in Bezug zu der z-Achse in radialer Richtung relativ zu dem Anschlussstutzen bewegt wird, an einer vorbestimmten weiteren Radialposition einrastet. In dieser Radialposition kann das Verbindungschassis beispielsweise nicht aus dem Anschlussstutzen herausfallen.

Die beschriebene weitere Radialposition kann als eine Montageposition bezeichnet werden. In der Montageposition weist das Halteelement einen radialen Versatz in Bezug zu dem Verbindungschassis auf. In dieser Position kann es beispielsweise einer Bedienperson ermöglicht werden, ohne das Halteelement separat festhalten zu müssen, das Verbindungschassis an dem Anschlussstutzen anzubringen ohne dass dabei das Halteelement im Wege ist.

Gemäß einem weiteren Ausführungsbeispiel der Erfindung weist das Halteelement eine massive Haltestruktur auf und die Montagehilfseinrichtung weist eine die massive Haltestruktur umgebende äußere Abdeckung auf. Die Abdeckung kann dabei auch als Verkleidung bezeichnet werden, welche zumindest in Bezug zu der z-Achse in radialer Richtung die Haltestruktur umgibt. Auf der in radialer Richtung gesehen inneren Seite der Haltestruktur, d.h. insbesondere zwischen den beiden Schenkeln der massiven Haltestruktur, befindet sich bevorzugt keine Abdeckung. Ein solcher innerer Teil der Abdeckung könnte nämlich einen den erfindungsgemäßen Eingriff des Halteelements in die Ausnehmung des Anschlussstutzens nachteilig beeinflussen.

Das oben beschriebene zumindest eine Schnappelement kann an der Abdeckung bzw. der Verkleidung angebracht oder ausgebildet sein. Dies hat den Vorteil, dass die Abdeckung lediglich eine Montagehilfe darstellen kann, welche nach Fertigstellung der Montage des Stellantriebs an dem Ventil keine weitere Funktion mehr erfüllt. Insbesondere für die Stabilität des Systems bestehend aus Verbindungschassis, Halteelement, Klemmelement und Anschlussstutzen bzw. Ventilkörper ist die Abdeckung nicht von Bedeutung.

Es wird darauf hingewiesen, dass die umgebende äußere Abdeckung jedoch unabhängig vor der oben beschriebenen Funktionalität auch noch eine Schutzwirkung haben kann. Dies gilt auch dann, wenn die Abdeckung, wie soeben erläutert, für die mechanische Stabilität des Systems nicht von Bedeutung ist. So kann die umgebende äußere Abdeckung das Ventil und/oder den Stellantrieb jedoch vor ungewollten Verunreinigungen, beispielsweise vor Staub und Schmutz, schützen.

Gemäß einem weiteren Aspekt der Erfindung wird ein Stellantrieb für ein Ventil, insbesondere für ein Ventil einer Heizungs-, Lüftungs- und/oder Klimaanlage, beschrieben. Der beschriebene Stellantrieb weist auf (a) ein Gehäuse, (b) ein an dem Gehäuse angebrachtes Verbindungschassis, und (c) eine Vorrichtung des oben beschriebenen Typs, wobei das Halteelement der Vorrichtung an dem Verbindungschassis angebracht ist.

Dem beschriebenen Stellantrieb liegt die Erkenntnis zugrunde, dass unter Verwendung der oben beschriebenen Koppelvorrichtung der Stellantrieb auf einfache, effiziente und insbesondere in Bezug auf mögliche Montagefehler eindeutige Weise an dem Anschlussstutzen des Ventilkörpers angebracht werden kann.

Das Verbindungschassis und das Gehäuse können einstückig ausgebildet sein oder das Verbindungschassis kann alternativdurch eine geeignete mechanische Verbindung, beispielsweise eine Verbindung mittels Schrauben, an dem Gehäuse angebracht sein.

Gemäß einem weiteren Ausführungsbeispiel der Erfindung weist der Stellantrieb ferner einen Motor auf, welcher mit dem Stößel des Ventils koppelbar ist. Der beschriebene Stellantrieb kann somit ein elektromechanischer Stellantrieb sein, welcher bei geeigneter elektrischer Ansteuerung eine geeignete Einstellung des Ventils bewirkt.

Es wird darauf hingewiesen, dass der Motor auf verschiedenen physikalischen Wechselwirkungsprinzipien beruhen kann. So kann der Motor nicht nur ein gewöhnlicher elektromagnetischer Motor, sondern zum Beispiel auch ein elektrohydraulischer Motor oder ein pneumatischer Motor sein.

Gemäß einem weiteren Aspekt der Erfindung wird ein Verfahren zum mechanischen Koppeln eines derartigen Stellantriebs mit einem Ventil beschrieben, welches durch einen entlang einer z-Achse verschiebbaren Stößel verstellbar ist. Das Verfahren weist auf (a) ein Positionieren des Stellantriebes hin zu dem Anschlussstutzen, (b) ein radiales Verschieben des Halteelementes von einer Ausgangsposition in eine Endposition, so dass das Halteelement in die Ausnehmung eingreift, welche an zwei einander gegenüberliegenden Seiten des Anschlussstutzens angebracht ist, und (c) Betätigen einer Klemmeinrichtung, welche an einem Abschnitt des Halteelements angeordnet ist, wobei dadurch der Abschnitt des Halteelements parallel zu der z-Achse relativ zu dem Verbindungschassis verschoben wird, so dass das Verbindungschassis an dem Anschlussstutzen anliegt.

Auch dem beschriebenen Verfahren liegt die Erkenntnis zugrunde, dass das Halteelement einfach durch eine in Bezug zu der axialen Richtung des Ventilstößels radiale Bewegung an der in dem Anschlussstutzen des Ventilkörpers ausgebildeten Ausnehmung angebracht und in die Endposition geschoben werden kann. Vor der beschriebenen Betätigung der Klemmeinrichtung weist das Halteelement relativ zu dem Anschlussstutzen ein ausreichendes Spiel auf, so dass das Anbringen des Halteelements ohne ein Werkzeug auch von einer ungeübten Bedienperson durchgeführt werden kann. Durch die Betätigung der Klemmeinrichtung wird der Abschnitt gegen das Verbindungschassis gedrückt und dabei der Anschlussstutzen, in dessen Ausnehmung das Halteelement eingreift, gegen das Verbindungschassis gedrückt. Wie bereits oben erwähnt, wird selbstverständlich bei einem stationären Anschlussstutzen bei einem Betätigen der Klemmeinrichtung das Verbindungschassis gegen den Anschlussstutzen gedrückt. Dadurch wird die relative räumliche Lage zwischen dem Stellantrieb und dem Ventil insbesondere hinsichtlich der relativen axialen Lage beider Komponenten spielfrei festgelegt. Dadurch kann auf einfache und effiziente Weise gewährleistet werden, dass einer bestimmten Stellung des Stellantriebs eindeutig eine genau definierte Stellung des Ventils zugeordnet werden kann. Dadurch kann der Stellantrieb das Ventil besonders genau steuern.

Gemäß einem weiteren Ausführungsbeispiel der Erfindung ist die Ausgangsposition eine Montageposition, in welcher das Halteelement in Bezug zu dem Verbindungschassis und/oder in Bezug zu dem Anschlussstutzen einen vorbestimmten radialen Versatz aufweist.

Die Montageposition und/oder die Endposition können dabei durch die oben beschriebenen und an dem Halteelement ausgebildeten oder angebrachten Einschnappelemente in Verbindung mit entsprechenden Einraststrukturen definiert werden. Dabei kann das jeweilige Einschnappelement an einer beliebigen Kante oder Schulter des Verbindungschassis einrasten.

Ein korrektes Positionieren des Verbindungschassis bzw. des Stellantriebs kann beispielsweise durch ein einfaches Aufsetzen des Verbindungschassis auf den Anschlussstutzen des Ventilkörpers erfolgen. Solange sich das Halteelement in der Montageposition befindet, kann es ein Aufsetzen des Verbindungschassis auf den Anschlussstutzen nicht behindern.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen.
Figur 1 zeigt in einer perspektivischen Darstellung einen Stellantrieb, welcher mittels eines Halteelements gemäß einem Ausführungsbeispiel der Erfindung an einem Anschlussstutzen eines Ventilkörpers positionsgenau fixiert ist.
Figur 2a zeigt in einer perspektivischen Darstellung das Halteelement, wie es in eine an dem Anschlussstutzen ausgebildete Ringnut eingreift.
Figur 2b zeigt in einer Querschnittsdarstellung ein Anheben eines Verbindungsabschnitts des Halteelements mittels einer Klemmeinrichtung.
Figur 2c zeigt in einer Querschnittsdarstellung das Halteelement, wie es in eine an dem Anschlussstutzen ausgebildete Ringnut eingreift.
Figur 2d zeigt das an dem Verbindungschassis angebrachte und in die Ringnut eingreifende Halteelement.
Figur 3a bis 3h zeigen eine Abfolge von verschiedenen Montageschritten zum mechanischen Koppeln des Stellantriebs an ein HLK-Ventil unter Verwendung eines an einem Verbindungschassis des Stellantriebs angebrachten Halteelements.

Es wird darauf hingewiesen, dass Merkmale bzw. Komponenten von unterschiedlichen Ausführungsformen, die mit den entsprechenden Merkmalen bzw. Komponenten der Ausführungsform nach gleich oder zumindest funktionsgleich sind, mit den gleichen Bezugszeichen oder mit einem anderen Bezugszeichen versehen sind, welches sich lediglich in seiner ersten Ziffer von dem Bezugszeichen einer entsprechenden Komponente unterscheidet. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

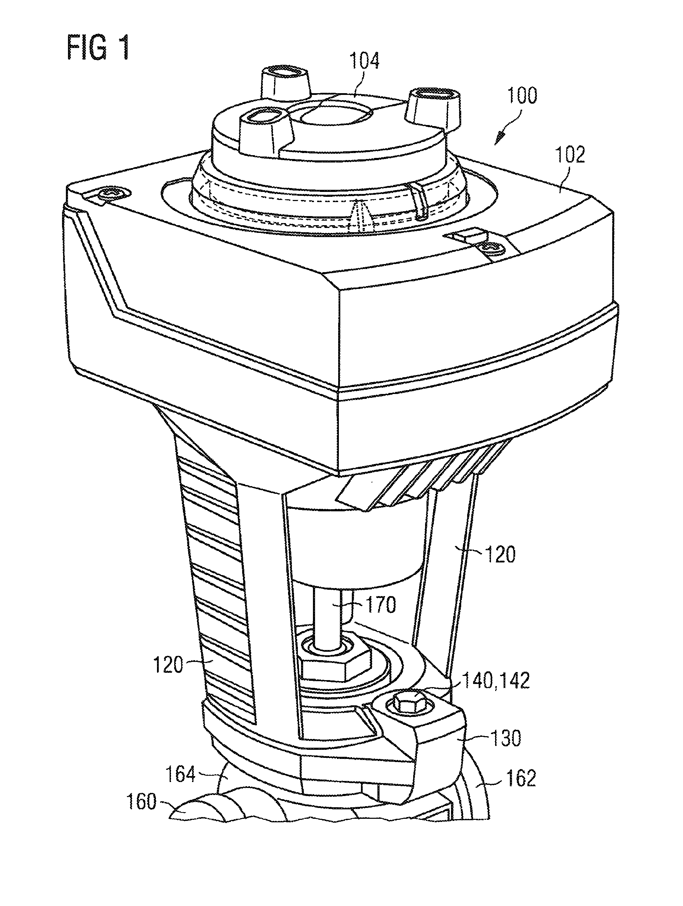

Figur 1 zeigt in einer perspektivischen Darstellung einen Stellantrieb 100, welcher an einem Anschlussstutzen 164 eines Ventilkörpers 160 positionsgenau fixiert ist. Der Anschlussstutzen kann auch als Ventilhals 164 bezeichnet werden. An dem Ventilkörpers 160 ist ferner ein Anschlussgewinde 162 für eine Rohrleitung ausgebildet.

Der Stellantrieb 100 weist ein Gehäuse 102 auf, welches auch als Abdeckung fungiert. In dem Gehäuse 102 befindet sich ein nicht dargestellter Elektromotor, mit dem der Stellantrieb 100 entsprechend einer elektrischen Ansteuerung des Motors angesteuert werden kann. An der Oberseite des Gehäuses 102 befindet sich ein Handbetätigungselement 104, mit dem der Stellantrieb 100 von einer Bedienperson bei Bedarf manuell verstellt werden kann. Für eine manuelle Verstellung des Stellantriebs 100 kann der Motor in nicht dargestellter Weise von einer nicht dargestellten Antriebsstange des Stellantriebs 100 entkoppelt werden.

Der Stellantrieb 100 weist ferner ein Verbindungschassis 120 auf, welches an dem Gehäuse 102 beispielsweise mittels einer Schraubverbindung befestigt ist. Gemäß dem hier dargestellten Ausführungsbeispiel ist das Verbindungschassis aus dem Material Aluminium hergestellt und kann deshalb auch als Aluminium Konsole 120 bezeichnet werden.

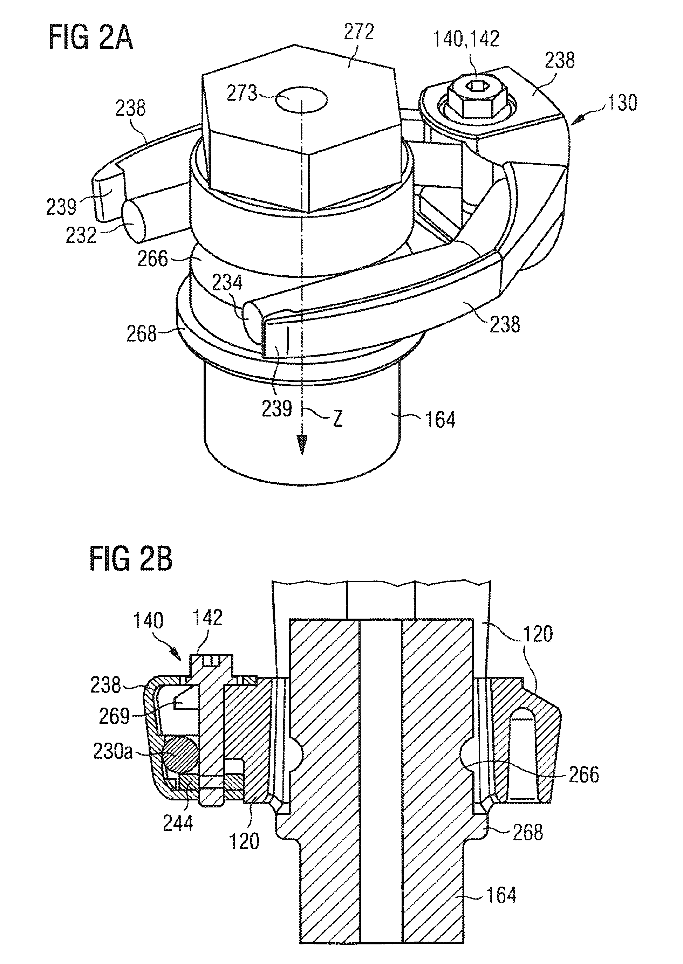

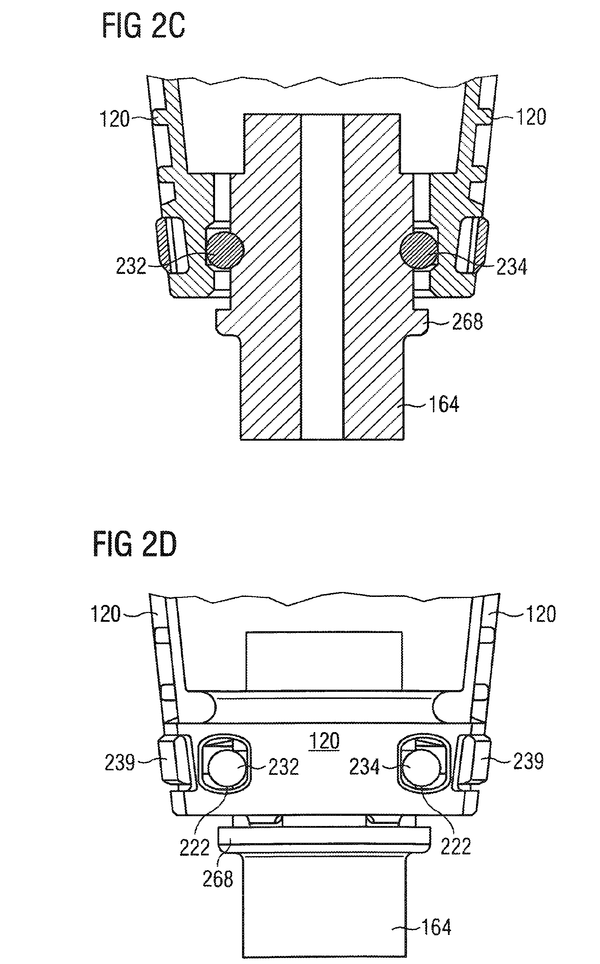

Die Befestigung des Verbindungschassis 120 an dem Anschlussstutzen 164 des Ventilkörpers 160 erfolgt mittels eines zwei Schenkel aufweisenden Halteelementes 130, welches an dem Verbindungschassis 120 angebracht ist. Mittels einer Klemmeinrichtung 140, welche gemäß dem hier dargestellten Ausführungsbeispiel als Schraube 142 ausgebildet ist, wird ein die beiden Schenkel verbindender Verbindungsabschnitt des Halteelements 130 in axialer Richtung in Richtung des Verbindungschassis angehoben. Da die beiden Schenkel in eine in Figur 1 nicht dargestellte Ringnut des Anschlussstutzens 164 eingreifen, wird auf diese Weise das Verbindungschassis 120 gegen den Anschlussstutzen 164 gedrückt und auf diese Weise die relative axiale Position zwischen Anschlussstutzen 164 und Verbindungschassis 120 genau festgelegt. Diese räumliche Fixierung wird nachfolgenden anhand der Figuren 2a, 2b, 2c und 2d noch genauer erläutert.

Figur 2a zeigt in einer perspektivischen Darstellung das Halteelement 130, wie es in eine an dem Anschlussstutzen 164 ausgebildete Ringnut 266 eingreift. Gemäß dem hier dargestellten Ausführungsbeispiel weist das Halteelement 130 eine Gabelform oder eine U-Form mit zwei Schenkeln, einem ersten Schenkel 232 und einem zweiten Schenkel 234, auf. Die beiden Schenkel 232, 234 sind über einen Verbindungsabschnitt miteinander zu einem mechanisch weitgehend starren Gebilde verbunden. Der Verbindungsabschnitt, welcher in Figur 2b mit dem Bezugszeichen 230a bezeichnet ist, befindet sich zwischen der Schraube 142 und einem zentralen Teil einer äußeren Abdeckung 238. Die beiden Schenkel 232 und 234 sowie der in Figur 2a nicht dargestellte Verbindungsabschnitt können aus einem stabilen Material, insbesondere aus Metall, gefertigt sein und bilden eine massive Haltestruktur.

Wie aus Figur 2a ersichtlich, weist gemäß dem hier dargestellten Ausführungsbeispiel der Anschlussstutzen 164 eine entlang des Umfangs des Anschlussstutzens 164 umlaufende Schulter 268 auf. An dem Anschlussstutzen 164 befindet sich ferner eine Ventilabdeckung 272, in welcher ein Durchgangsloch 273 für den in Figur 2a nicht dargestellten Stößel 170 (siehe Figur 1) ausgebildet ist.

Wie ferner aus Figur 2a ersichtlich, umgibt die Abdeckung 238 die beiden Schenkel 232 und 234 sowie den Verbindungsabschnitt des Halteelements 130. An den Enden der Abdeckung jeweils im Bereich des Endes eines Schenkels ist jeweils ein Einschnappelement 239 ausgebildet. Die Einschnappelemente 239 sind derart eingerichtet ist, dass das Halteelement 130, wenn es in Bezug zu einer z-Achse in radialer Richtung auf den Anschlussstutzen 164 geschoben wird, an einer vorbestimmten Radialposition einrastet. Gemäß dem hier dargestellten Ausführungsbeispiel rastet das Halteelement 130 bei einer derartigen radialen Verschiebung auf den Anschlussstutzen 164 genau zwei Mal ein.

Eine erste Einschnapp-Position ist eine sog. Montageposition, bei der das Verbindungschassis 120 einen radialen Versatz in Bezug zu der z-Achse aufweist. In dieser Position kann es beispielsweise einer Bedienperson ermöglicht werden, ohne das Halteelement 130 separat festhalten zu müssen, das Verbindungschassis 120 an dem Anschlussstutzen 164 anzubringen. Nach dem Anbringen des Verbindungschassis 120 an dem Anschlussstutzen 164 kann dann das Halteelement 130 in die zweite Einschnapp-Position radial geschoben werden. Die zweite Einschnapp-Position kann dann die radiale Endposition des Verbindungschassis 120 zu dem Anschlussstutzen 164 darstellen. In dieser Endposition kann das Verbindungschassis dann durch ein Anheben des Verbindungsabschnitts 230a und damit auch durch ein Anheben der beiden Schenkelabschnitte, die in die Ringnut eingreifen, positionsgenau und axial spielfrei an dem Anschlussstutzen 164 fixiert werden. Ferner kann in dieser Endposition der Stößel 170 mit dem Koppelelement des Stellantriebs 100 verbunden werden.

Aufgrund der oben beschrieben Wirkung der äußeren Abdeckung 238 und insbesondere der Einschnappelemente 239 der äußeren Abdeckung 238 kann die äußeren Abdeckung 238 auch als Montagehilfseinrichtung 238 bezeichnet werden.

Figur 2b zeigt in einer Querschnittsdarstellung das Halteelement 130, welches durch ein Anheben des Verbindungsabschnitts 230a das Verbindungschassis 120 in axialer z-Richtung positionsgenau und spielfrei an dem Anschlussstutzen 164 fixiert.

Durch die Klemmeinrichtung 140, welche gemäß dem hier dargestellten Ausführungsbeispiel die Schraube 142 und ein als Klemmplatte ausgebildetes Klemmelement 244 aufweist, wird selektiv der Verbindungsabschnitt 230a des Halteelements relativ zu der Ringnut 266 des Anschlussstutzens 164 angehoben. Dies geschieht durch die Klemmplatte 244, welche ein Loch mit einem Innengewinde aufweist, in welche die Schraube 142 mit einem komplementären Außengewinde eingreift. Somit wird die Position der Klemmplatte 244 durch eine Drehung der Schraube 142 in Figur 2b je nach Drehrichtung nach oben oder nach unten verändert.

Die Endabschnitte der beiden Schenkel des Halteelements 130, welche an dem Verbindungsabschnitt zusammengefügt sind, werden durch die Klemmeinrichtung nicht angehoben. Vielmehr liegen diese Endabschnitte, wie in Figur 2d ersichtlich, an jeweils einem Abstützbereich oder Abstützpunkt 222 des Verbindungschassis 120 an. Bei einem Anheben des Verbindungsabschnitts 230a werden jedoch die mittleren Abschnitte der beiden Schenkel, welche in die Ringnut 266 eingreifen, angehoben. Dabei ergibt sich das Maß der Anhebung gemäß den allgemein bekannten Hebelgesetzen aus dem Maß der Anhebung des Verbindungsabschnitts 230a und dem Verhältnis zwischen (a) dem Abstand zwischen dem jeweiligen mittleren Abschnitt und dem Verbindungsabschnitt 230a und (b) dem Abstand zwischen dem jeweiligen Endabschnitt und dem Verbindungsabschnitt 230a. Die Abstände werden dabei auf die Zeichenebene von Figur 2b projiziert.

Durch das Anheben der beiden mittleren Abschnitte wird, wie bereits oben beschrieben, das Verbindungschassis 120 spielfrei an dem Anschlussstutzen 164 fixiert.

Wie aus Figur 2b ersichtlich, weist die Klemmeinrichtung 140 einen Anschlag 269 auf. Diese Anschlag 269 gewährleistet, dass das Halteelement 130 auch dann nicht ihre Funktionalität verliert, wenn die Schraube 142 trotz eines bereits vorhandenen Anliegens des Verbindungschassis 120 an dem Anschlussstutzen 164 weiter gedreht wird. Durch den Anschlag 269 wird nämlich die maximale Strecke festgelegt, die der Verbindungsabschnitte 230a angehoben werden kann. Diese Strecke ist so dimensioniert, dass das Halteelement 130 elastisch und nur im zulässigen Maß verformt werden kann. Auf diese Weise kann bei einem zu kraftvollen Betätigen der Klemmeinrichtung 140 eine Beschädigung des Halteelements 130 und damit der ganzen Koppelvorrichtung ausgeschlossen werden.

Figur 2c zeigt in einer Querschnittsdarstellung die beiden Schenkel 232 und 234 des Halteelements, wie sie in die an dem Anschlussstutzen 164 ausgebildete Ringnut eingreifen. Die Schnittebene der Querschnittsdarstellung von Figur 2c ist senkrecht zu der Schnittebene der Querschnittsdarstellung von Figur 2b.

Figur 2d zeigt in einer Draufsicht das an dem Verbindungschassis 120 angebrachte und in die Ringnut eingreifende Halteelement, von dem lediglich die Enden der beiden Schenkel 232 und 234 zu sehen sind. Ferner sind die beiden Einschnappelemente 239 zu erkennen, die an den beiden Enden der das Halteelement 130 umgebenden äußeren Abdeckung ausgebildet sind. Wie aus Figur 2d ersichtlich, weist der untere Teil des Verbindungschassis 120 zwei Öffnungen auf, durch welche das Halteelement bzw. die beiden Schenkel 232 und 234 des Halteelements geschoben werden können.

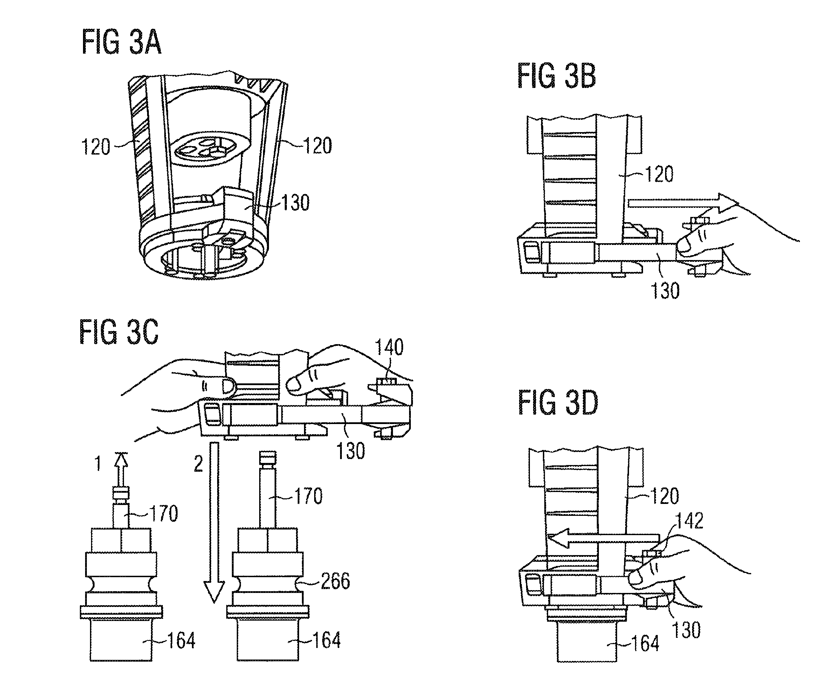

Figur 3a bis 3h zeigen eine Abfolge von verschiedenen Montageschritten zum mechanischen Koppeln des Stellantriebs 100 an ein HLK-Ventil unter Verwendung eines an einem Verbindungschassis 120 des Stellantriebs 100 angebrachten Halteelements 130.

Figur 3a zeigt einen ersten Montageschritt. Dabei wird zunächst eine Antriebsspindel des Stellantriebs 100 so verfahren, dass sich ein axial verschiebbares Koppelelement in einer oberen Anschlagsposition befindet. Das Koppelelement dient später zum Verbinden eines Koppelelements des Stellantriebs mit dem Stößel 170 des HLK-Ventils. Wie aus Figur 3a ersichtlich, ist das Halteelement 130 bereits an dem Verbindungschassis 120 angebracht.

Figur 3b zeigt einen zweiten Montageschritt. Dabei wird das Halteelement 130 radial nach außen in eine Montageposition verschoben. Die Montageposition ist dabei durch die in Figur 2a dargestellten Einschnappelemente 239 definiert, welche an dem Verbindungschassis 120 derart einrasten, dass sich das Halteelement radial versetzt zu dem Verbindungschassis 120 befindet. Durch die Einschnappelemente 239 wird auf vorteilhafte Weise ein weiteres radiales Herausrutschen des Haltelements 130 verhindert.

Figur 3c zeigt einen dritten Montageschritt. Dabei wird zunächst der Stößel 170 des Ventils nach oben geschoben. Dies erleichtert ein späteres Verbinden des Stößels 170 mit dem Koppelelement des Stellantriebs 100. Nach dem Anheben des Stößels 170 wird das Verbindungschassis 120 auf den Anschlussstutzen bzw. auf den Ventilhals 164 aufgesetzt. Da sich das Halteelement 130 immer noch in der Montageposition befindet, kann das Verbindungschassis 120 ohne eine Behinderung durch das Halteelement 130 aufgesetzt werden.

Figur 3d zeigt einen vierten Montageschritt. Dabei wird das Halteelement 130 von der Montageposition radial nach innen in die Endposition geschoben. In der Endposition greifen die beiden Schenkel des Halteelements von außen in die Ringnut 266 ein. Dadurch ist bis auf ein kleines Spiel in axialer Richtung (entlang der z-Achse) und die Drehwinkellage um die z- Achse die relative Lage zwischen Verbindungschassis 120 bzw. Stellantrieb 100 auf der einen Seite und dem Anschlussstutzen 164 bzw. dem Ventil auf der anderen Seite festgelegt.

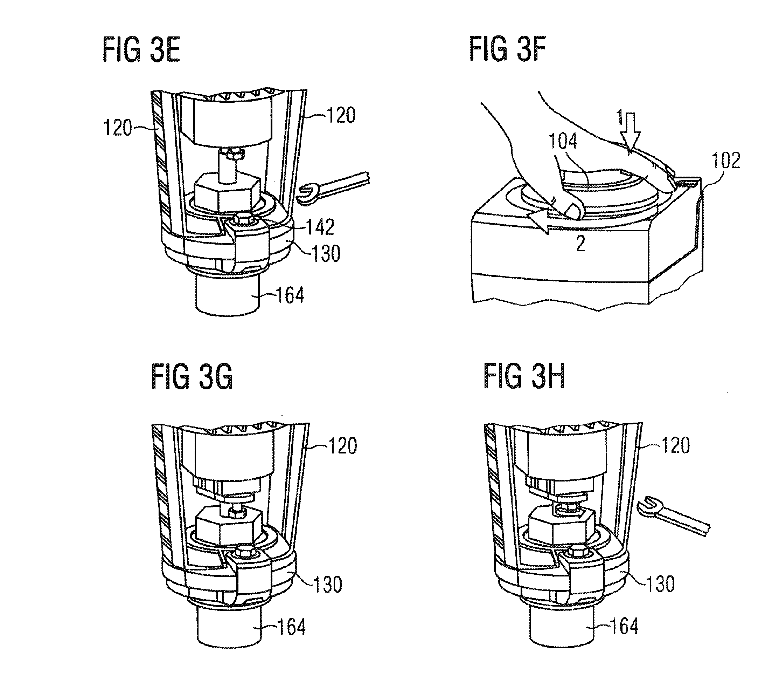

Figur 3e zeigt einen fünften Montageschritt. Dabei wird die Schraube 142 der Klemmeinrichtung mittels eines Schraubenschlüssel angezogen. Wie bereits oben beschrieben, wird dadurch der Verbindungsabschnitt 230a des Halteelements 130 angehoben. Dadurch werden, wie ebenfalls oben ausführlich beschrieben, auch die mittleren Abschnitte der beiden Schenkel, die in die Ringnut eingreifen, angehoben. Als Folge ergibt sich eine spielfreie räumliche Fixierung des Systems bestehend aus Verbindungschassis 120, Halteelement 130 und Ventil.

Figur 3f zeigt einen sechsten Montageschritt. Dabei wird von einer Bedienperson das Handbetätigungselement 104 so verdreht, dass sich das Koppelelement des Stellantriebes 100 axial zu dem Stößel 170 bewegt.

Figur 3g zeigt einen siebten Montageschritt. Das Koppelelement und der Stößel 170 befinden sind so nahe beieinander, dass sie miteinander verbunden werden können.

Figur 3h zeigt einen achten Montageschritt. Das Koppelelement und der Stößel 170 werden miteinander verbunden. Gemäß dem hier dargestellten Ausführungsbeispiel wird dazu ein gewöhnlicher Schraubenschlüssel verwendet.

Zusammenfassend bleibt festzustellen:
Durch die in diesem Dokument beschriebene Kopplung zwischen einem Verbindungschassis eines Stellantriebes und einem Anschlussstutzen eines Ventil, insbesondere eines HLK-Ventils, kann auf einfache Weise eine in axialer Richtung spielfreie Verbindung hergestellt werden. Die beschriebene Montage von Ventil und Stellantrieb kann in beliebiger Drehwinkel-Lage um die Stößel-Achse erfolgen. Die Montage und
Demontage des Stellantriebs kann von einem gewöhnlichen Fachpersonal mit gängigen Werkzeugen durchgeführt werden. Die Montage ist einfach und eindeutig, so dass eine Fehlmontage mit hoher Sicherheit ausgeschlossen werden kann. Für die Montage und/oder Demontage sind keine losen, verlierbaren Kleinteile wie Schrauben oder Muttern erforderlich. Die Schraube der Klemmeinrichtung kann am Gewindeanfang verstemmt sein, so dass sie nicht verloren werden kann. Durch ein Drehen der Schraube der Klemmeinrichtung wird das ganze gekuppelte System bestehend aus Ventil und Stellantrieb gesichert. Ein Monteur kann durch das Anziehen der Schraube die korrekte Montage des Systems einfach und zuverlässig erkennen.

Das U-förmige Halteelement führt zu einer formschlüssigen Verbindung zwischen Verbindungschassis und dem Ventilhals. Durch eine radiale Verschiebung des Halteelements wird die Kupplung geschlossen und ein Formschluss erzeugt. Mittels der Klemmeinrichtung wird das U-förmige Halteelement axial verspannt. Durch die resultierende Klemmwirkung werden die Komponenten Verbindungschassis, Ventilhals und Halteelement relativ zueinander spielfrei fixiert. Dadurch wird eine eindeutige axiale Positionierung von Verbindungschassis und Ventilhals gewährleistet.

Sollte das Verbindungschassis beispielsweise sehr stark korrodiert sein, dann kann die beschriebene Kupplung in kurzer Zeit zerstörend geöffnet werden, ohne dass der Ventilhals beschädigt wird.

### Bezugszeichenliste

- 100: Stellantrieb
- 102: Gehäuse
- 104: Handbetätigungselement
- 106: transparente Abdeckung / Sichtfenster
- 108: Markierung
- 120: Verbindungschassis / Aluminium Konsole
- 130: Halteelement
- 140: Klemmeinrichtung
- 142: Schraube
- 160: Ventilkörper
- 162: Anschlussgewinde für Rohrleitung
- 164: Anschlussstutzen / Ventilhals
- 170: Stößel
- 222: Abstützbereich / Abstützpunkt
- 230a: Verbindungsabschnitt
- 232: erster Schenkel (massive Haltestruktur)
- 234: zweiter Schenkel (massive Haltestruktur)
- 238: umgebende äußere Abdeckung / Montagehilfseinrichtung
- 239: Einschnappelement
- 244: Klemmelement / Klemmplatte
- 266: Ausnehmung / Nut / Ringnut
- 268: Schulter
- 269: Anschlag
- 272: Ventilabdeckung
- 273: Stößeldurchführung

## Patentansprüche

1. Vorrichtung zum mechanischen Koppeln eines Stellantriebs (100) mit einem Ventil, welches durch einen entlang einer z-Achse verschiebbaren Stößel (170) verstellbar ist, die Vorrichtung aufweisend
• ein Halteelement (130),
welches an einem Verbindungschassis (120) des Stellantriebs (100) anbringbar ist und
welches ausgebildet ist, an zwei einander gegenüberliegenden Seiten eines Anschlussstutzens (164) eines Ventilkörpers (160) in eine an dem Anschlussstutzen angebrachten Ausnehmung (266) einzugreifen, **dadurch gekennzeichnet, dass** die Vorrichtung aufweist:
• eine Klemmeinrichtung (140), welche an einem Abschnitt (230a) des Halteelements (130) angeordnet ist und welche derart ausgebildet ist, dass
bei einer Betätigung der Klemmeinrichtung (140) der Abschnitt (230a) des Halteelements (130) parallel zu der z-Achse relativ zu dem Verbindungschassis (120) verschoben wird, so dass das Verbindungschassis (120) an dem Anschlussstutzen (164) anliegt.

2. Vorrichtung nach dem vorangehenden Anspruch, wobei
die Klemmeinrichtung (140) eine Schraube (142) und eine mit der Schraube (142) über ein Gewinde der Schraube (142) gekoppeltes Klemmelement (244) aufweist.

3. Vorrichtung nach einem der vorangehenden Ansprüche, wobei die Ausnehmung eine Nut (266) ist.

4. Vorrichtung nach dem vorangehenden Anspruch, wobei die Nut eine zumindest teilweise um den Anschlussstutzen (164) umlaufende Ringnut (266) ist.

5. Vorrichtung nach einem der vorangehenden Ansprüche, wobei das Halteelement (130) einen ersten Schenkel (232) und einen zweiten Schenkel (234) aufweist,
wobei der erste Schenkel (232) ausgebildet ist um in einen ersten Bereich der Ausnehmung (266) einzugreifen und wobei der zweite Schenkel (234) ausgebildet ist um in einen zweiten Bereich der Ausnehmung (266) einzugreifen, wobei der erste Bereich und der zweite Bereich in Bezug zu der z-Achse an einander gegenüberliegenden Seiten des Anschlussstutzens (164) ausgebildet sind.

6. Vorrichtung nach dem vorangehenden Anspruch, wobei der Abschnitt (230a) des Halteelements (130) ein Verbindungsabschnitt (230a) ist, an welchem der erste Schenkel (232) und der zweite Schenkel (234) angebracht sind.

7. Vorrichtung nach einem der vorangehenden Ansprüche 5 bis 6, ferner aufweisend
eine Montagehilfseinrichtung (238), welche im Bereich des Endes von zumindest einem der beiden Schenkel (232, 234) ein Einschnappelement (239) aufweist, welches derart eingerichtet ist, dass das Halteelement (130), wenn es in Bezug zu der z-Achse in radialer Richtung zu dem Anschlussstutzen (164) bewegt wird, an einer vorbestimmten Radialposition einrastet.

8. Vorrichtung nach dem vorangehenden Anspruch, wobei das zumindest eine Halteelement (130) derart ausgeformt ist, dass das Halteelement (130), wenn es in Bezug zu der z-Achse in radialer Richtung relativ zu dem Anschlussstutzen (164) bewegt wird, an einer vorbestimmten weiteren Radialposition einrastet.

9. Vorrichtung nach einem der vorangehenden Ansprüche 5 bis 8, wobei
das Halteelement (130) eine massive Haltestruktur aufweist und
die Montagehilfseinrichtung eine die massive Haltestruktur umgebende äußere Abdeckung (238) aufweist.

10. Stellantrieb für ein Ventil, insbesondere für ein Ventil einer Heizungs-, Lüftungs- und/oder Klimaanlage, der Stellantrieb (100) aufweisend
• ein Gehäuse (102),
• ein an dem Gehäuse angebrachtes Verbindungschassis (120),
und
• eine Vorrichtung nach einem der vorangehenden Ansprüche 1 bis 9, wobei das Halteelement (130) der Vorrichtung an dem Verbindungschassis (120) angebracht ist.

11. Stellantrieb nach dem vorangehenden Anspruch, ferner aufweisend
• einen Motor, welcher mit dem Stößel (170) des Ventils koppelbar ist.

12. Verfahren zum mechanischen Koppeln eines Stellantriebs (100) nach einem der vorangehenden Ansprüche 10 bis 11 mit einem Ventil, welches durch einen entlang einer z-Achse verschiebbaren Stößel (170) verstellbar ist, das Verfahren aufweisend
• Positionieren des Stellantriebes (100) hin zu dem Anschlussstutzen (164),
• radiales Verschieben des Halteelementes (130) von einer Ausgangsposition in eine Endposition, so dass das Halteelement (130) in die Ausnehmung (266) eingreift, welche an zwei einander gegenüberliegenden Seiten des Anschlussstutzens (164) angebracht ist, und
• Betätigen einer Klemmeinrichtung (140), welche an einem Abschnitt (230a) des Halteelementes (130) angeordnet ist, wobei dadurch der Abschnitt (230a) des Halteelements (130) parallel zu der z-Achse relativ zu dem Verbindungschassis (120) verschoben wird, so dass das Verbindungschassis (120) an dem Anschlussstutzen (164) anliegt.

13. Verfahren nach dem vorangehenden Anspruch, wobei die Ausgangsposition eine Montageposition ist, in welcher das Halteelement (130) in Bezug zu dem Verbindungschassis (120) und/oder in Bezug zu dem Anschlussstutzen (164) einen vorbestimmten radialen Versatz aufweist.

## Claims

1. Device for mechanically coupling an actuator (100) to a valve which is adjustable by means of a plunger (170) that is displaceable along a z-axis, the device comprising
• a retaining element (130)
which can be mounted on a connecting chassis (120) of the actuator (100) and
which is embodied for engaging on two opposite sides of a connection piece (164) of a valve body (160) in a recess (266) incorporated in the connection piece, **characterised in that** the device comprises:
• a clamping device (140) which is disposed on a section (230a) of the retaining element (130) and which is embodied in such a way that
when the clamping device (140) is actuated the section (230a) of the retaining element (130) is displaced parallel to the z-axis relative to the connecting chassis (120) such that the connecting chassis (120) bears against the connection piece (164).

2. Device according to the preceding claim, wherein
the clamping device (140) has a screw (142) and a clamping element (244) coupled to the screw (142) by way of a thread of the screw (142).

3. Device according to one of the preceding claims, wherein
the recess (266) is a groove.

4. Device according to the preceding claim, wherein
the groove is an annular groove (266) running at least partially around the circumference of the connection piece (164).

5. Device according to one of the preceding claims, wherein
the retaining element (130) has a first arm (232) and a second arm (234),
wherein the first arm (232) is embodied for engaging in a first area of the recess (266) and wherein the second arm (234) is embodied for engaging in a second area of the recess (266), the first area and the second area being embodied on opposite sides of the connection piece (164) in relation to the z-axis.

6. Device according to the preceding claim, wherein
the section (230a) of the retaining element (130) is a connecting section (230a) on which the first arm (232) and the second arm (234) are mounted.

7. Device according to one of the preceding claims 5 to 6, additionally having
an assembly aid facility (238) which has a snap-in element (239) in the vicinity of the end of at least one of the two arms (232, 234), which snap-in element is configured in such a way that the retaining element (130), when moved in relation to the z-axis in the radial direction relative to the connection piece (164), locks into place at a predetermined radial position.

8. Device according to the preceding claim, wherein
the at least one retaining element (130) is shaped in such a way that the retaining element (130), when moved in relation to the z-axis in the radial direction relative to the connection piece (164), locks into place at a predetermined further radial position.

9. Device according to one of the preceding claims 5 to 8, wherein
the retaining element (130) has a solid retaining structure and the assembly aid facility has an outer cover (238) enclosing the solid retaining structure.

10. Actuator for a valve, in particular for a valve of a heating, ventilation and/or air conditioning system, the actuator (100) having
• a housing (102),
• a connecting chassis (120) mounted on the housing, and
• a device according to one of the preceding claims 1 to 9,
wherein the retaining element (130) of the device is mounted on the connecting chassis (120).

11. Actuator according to the preceding claim, additionally having
• a motor which can be coupled to the plunger (170) of the valve.

12. Method for mechanically coupling an actuator (100) according to one of the preceding claims 10 to 11 to a valve which is adjustable by means of a plunger (170) that is displaceable along a z-axis, the method comprising
• positioning the actuator (100) in the direction of the connection piece (164),
• radially displacing the retaining element (130) from a starting position into an end position such that the retaining element (130) engages in the recess (266) which is incorporated on two opposite sides of the connection piece (164), and
• actuating a clamping device (140) which is disposed on a section (230a) of the retaining element (130), thereby causing the section (230a) of the retaining element (130) to be displaced parallel to the z-axis relative to the connecting chassis (120) such that the connecting chassis (120) bears against the connection piece (164).

13. Method according to the preceding claim, wherein
the starting position is an assembly position in which the retaining element (130) has a predetermined radial offset in relation to the connecting chassis (120) and/or in relation to the connection piece (164).

## Revendications

1. Dispositif de couplage mécanique d'un mécanisme de commande (100) avec une soupape, qui est réglable par le biais d'un coulisseau (170) mobile le long d'un axe z, le dispositif comprenant
• un élément de retenue (130),
qui peut être installé sur un châssis d'assemblage (120) du mécanisme de commande (100) et
qui est réalisé pour s'intégrer au niveau de deux côtés opposés l'un à l'autre d'un raccord (164) d'un corps de soupape dans un évidement (266) ménagé au niveau du raccord, **caractérisé en ce que** le dispositif présente
• un dispositif de serrage (140), qui est agencé au niveau d'une section (230a) de l'élément de retenue (130) et qui est réalisé de telle sorte que
lors d'un actionnement du dispositif de serrage (140) la section (230a) de l'élément de retenue (130) est déplacée parallèlement à l'axe z par rapport au châssis d'assemblage (120), de sorte que le châssis d'assemblage (120) repose sur le raccord (164).

2. Dispositif selon la revendication précédente, dans lequel le dispositif de serrage (140) présente une vis (142) et un élément de serrage (244) couplé à la vis (142) par l'intermédiaire d'un filetage de la vis (142).

3. Dispositif selon l'une des revendications précédentes, dans lequel l'évidement est une rainure (266).

4. Dispositif selon la revendication précédente, dans lequel la rainure est une rainure annulaire (266) entourant au moins partiellement le raccord (164).

5. Dispositif selon l'une des revendications précédentes, dans lequel l'élément de retenue (130) présente une première branche (232) et une deuxième branche (234),
dans lequel la première branche (232) est réalisée pour avoir prise dans une première zone de l'évidement (266) et dans lequel la deuxième branche (234) est réalisée pour avoir prise dans une deuxième zone de l'évidement (266), dans lequel la première zone et la deuxième zone sont réalisées par rapport à l'axe z au niveau de côtés opposés l'un à l'autre du raccord (164).

6. Dispositif selon la revendication précédente, dans lequel la section (230a) de l'élément de retenue (130) est une section d'assemblage (230a), sur laquelle la première branche (232) et la deuxième branche (234) sont installées.

7. Dispositif selon l'une des revendications précédentes 5 à 6, présentant en outre
un dispositif d'aide au montage (238), qui présente dans la zone de l'extrémité d'au moins l'une des deux branches (232, 234) un élément d'encliquetage (239), qui est agencé de telle sorte que l'élément de retenue (130), lorsqu'il est déplacé par rapport à l'axe z dans la direction radiale par rapport au raccord (164), s'enclenche dans une position radiale prédéterminée.

8. Dispositif selon la revendication précédente, dans lequel l'au moins un élément de retenue (130) est formé de telle sorte que l'élément de retenue (130), lorsqu'il est déplacé par rapport à l'axe z dans la direction radiale par rapport au raccord (164), s'enclenche dans une autre position radiale prédéterminée.

9. Dispositif selon l'une des revendications 5 à 8, dans lequel
l'élément de retenue (130) présente une structure de retenue massive et
le dispositif d'aide au montage présente un recouvrement extérieur (238) entourant la structure de maintien massive.

10. Mécanisme de commande pour une soupape, notamment pour une soupape d'une installation de chauffage, d'aération et/ou de climatisation, le mécanisme de commande (100) présentant
• un boîtier (102),
• un châssis d'assemblage (120) installé sur le boîtier, et
• un dispositif selon l'une des revendications précédentes 1 à 9, dans lequel l'élément de retenue (130) du dispositif est installé sur le châssis d'assemblage (120).

11. Mécanisme de commande selon la revendication précédente, présentant en outre
• un moteur, qui peut être couplé au coulisseau (170) de la soupape.

12. Dispositif de couplage mécanique d'un mécanisme de commande (100) selon l'une des revendications précédentes 10 à 11 avec une soupape, qui est réglable par le biais d'un coulisseau (170) mobile le long d'un axe z, le dispositif comprenant
• le positionnement du mécanisme de commande (100) par rapport au raccord (164),
• le déplacement radial de l'élément de retenue (130) depuis une position initiale jusqu'à une position finale, de sorte que l'élément de retenue (130) a prise dans l'évidement (266), qui est ménagé au niveau de deux côtés opposés l'un à l'autre d'un raccord (164), et
• l'actionnement d'un dispositif de serrage (140), qui est agencé au niveau d'une section (230a) de l'élément de retenue (130), dans lequel de ce fait la section (230a) de l'élément de retenue (130) est déplacée parallèlement à l'axe z par rapport au châssis d'assemblage (120), de sorte que le châssis d'assemblage (120) repose sur le raccord (164).

13. Dispositif selon la revendication précédente, dans lequel la position initiale est une position de montage, dans laquelle l'élément de retenue (130) présente par rapport au châssis d'assemblage (120) et/ou par rapport au raccord (164) un décalage radial prédéterminé.
